# EUROPÄISCHE PATENTSCHRIFT

(11) **EP 0 695 991 B1**
(45) Veröffentlichungstag und Bekanntmachung des Hinweises auf die Patenterteilung: **22.08.2001**
(21) Anmeldenummer: 95109567.8
(22) Anmeldetag: 20.06.1995
(51) Int. Cl.: G06F 9/445

(54) **Programmierverfahren für einen Remanentspeicher einer speicherprogrammierbaren Steuerung**
Programming method for a non-volatile memory of a microcontroller
Méthode de programmation pour mémoire non-volatile d'un microcontrôleur

(30) Priorität: 30.06.1994 DE 4423004
(43) Veröffentlichungstag der Anmeldung: 07.02.1996
(73) Patentinhaber: SIEMENS AKTIENGESELLSCHAFT, 80333 München (DE)
(72) Erfinder: Bock, Günther, Dipl.-Ing., D-92245 Kümmersbruck (DE); Kammler, Heiko, Dipl.-Ing. (FH), D-92284 Poppenricht (DE)

(56) Entgegenhaltungen:
- EP-A- 0 464 433
- EP-A- 0 573 190
- GB-A- 2 127 188

## Beschreibung

Die vorliegende Erfindung betrifft ein Programmierverfahren für einen Remanentspeicher einer speicherprogrammierbaren Steuerung. Darüber hinaus betrifft die Erfindung eine speicherprogrammierbare Steuerung mit einem Remanentspeicher sowie eine Programmiereinheit zum Generieren eines Anwenderprogramms für eine speicherprogrammierbare Steuerung.

Im Stand der Technik wird zur Erstellung eines Anwenderprogramms für eine speicherprogrammierbare Steuerung das Anwenderprogramm in ein Programmiergerät eingegeben und mittels dieses Programmiergeräts erstellt. Das Anwenderprogramm wird dann - gegebenenfalls nach einer Kompilierung - vom Programmiergerät in einen Remanentspeicher der speicherprogrammierbaren Steuerung übertragen. Dabei sind in der speicherprogrammierbaren Steuerung alle Betriebssystemfunktionen remanent abgespeichert.

Diese Vorgehensweise ist insofern nicht vorteilhaft, als in der speicherprogrammierbaren Steuerung stets das gesamte Betriebssystem abgespeichert ist. Dieser Speicherplatz wird also benötigt, unabhängig davon, ob die zugehörigen Betriebssystemfunktionen vom Anwenderprogramm aufgerufen werden oder nicht. Insbesondere bei kleinen Anwenderprogrammen führt dies zu einer extrem schlechten Speicherausnutzung sowie zu einer ungebührlichen Verringerung der Speicherkapazität für das Anwenderprogramm.

Aus der EP-A-0 464 433 ist eine Mikrocontroller-Einrichtung mit einem Prozessor und einem ersten Speicher bekannt, in welchen ein durch einen Host-Rechner programmierbares Anwenderprogramm hinterlegbar ist, das über eine Kommunikationsschnittstelle dem Speicher zuführbar ist. Ein in einem weiteren Speicher hinterlegtes durch den Prozessor ausführbares Steuerprogramm ist zum Programmieren des ersten Speichers vorgesehen, wobei dazu Daten- und Adressinformationen genutzt werden, die der Host-Rechner über die Kommunikationsschnittstelle bereitstellt.

Aus der GB-A-2 127 188 ist ein Linker bekannt, der ein in einem Objekt-Code vorliegendes Anwenderprogramm mit ebenfalls in einem Objekt-Code vorliegenden Teilen einer Laufzeitbibliothek zu einem durch einen Prozessor ausführbaren Programm verbindet, wobei nur diejenigen Teile mit dem Anwenderprogramm verbunden werden, die für dessen Ausführung erforderlich sind.

Der vorliegenden Erfindung liegt die Aufgabe zugrunde, mit einem Progammierverfahren der eingangs genannten Art eine Möglichkeit zur Erhöhung der Speicherkapazität und Speicherausnutzung zu schaffen, wobei jedoch der prinzipiell mögliche Befehlsumfang nicht eingeschränkt werden soll. Darüber hinaus ist eine speicherprogrammierbare Steuerung und eine Programmiereinheit mit einer derartigen Möglichkeit anzugeben.

Im Hinblick auf ein Programmierverfahren wird die Aufgabe mit den im Anspruch 1 angegebenen Maßnahmen gelöst.

Die zugehörige speicherprogrammierbare Steuerung weist einen Prozessor und einen Remanentspeicher auf, wobei der Prozessor mit Hilfe von Betriebssystemfunktionen das im Remanentspeicher abgespeicherte Anwenderprogramm ausführen kann. Erfindungsgemäß sind im Remanentspeicher zusätzlich zum Anwenderprogramm nur die zur Ausführung des Anwenderprogramms erforderlichen Betriebssystemfunktionen abgespeichert.

Die Programmiereinheit zum Generieren des Anwenderprogramms zeichnet sich dadurch aus, daß alle Betriebssystemfunktionen der speicherprogrammierbaren Steuerung in der Programmiereinheit abgespeichert sind bzw. von ihr generierbar sind und daß von der Programmiereinheit anhand des Anwenderprogramms aus den Betriebssystemfunktionen der speicherprogrammierbaren Steuerung die Betriebssystemfunktionen ermittelt werden, die zur Ausführung des Anwenderprogramms durch die speicherprogrammierbare Steuerung erforderlich sind.

Weitere Vorteile und Einzelheiten ergeben sich aus der nachfolgenden Beschreibung eines Ausführungsbeispiels sowie in Verbindung mit den Figuren.

Es zeigen:
FIG 1 eine Programmiereinheit und ein Rechengerät und
FIG 2 ein Ablaufdiagramm für das Programmierverfahren.

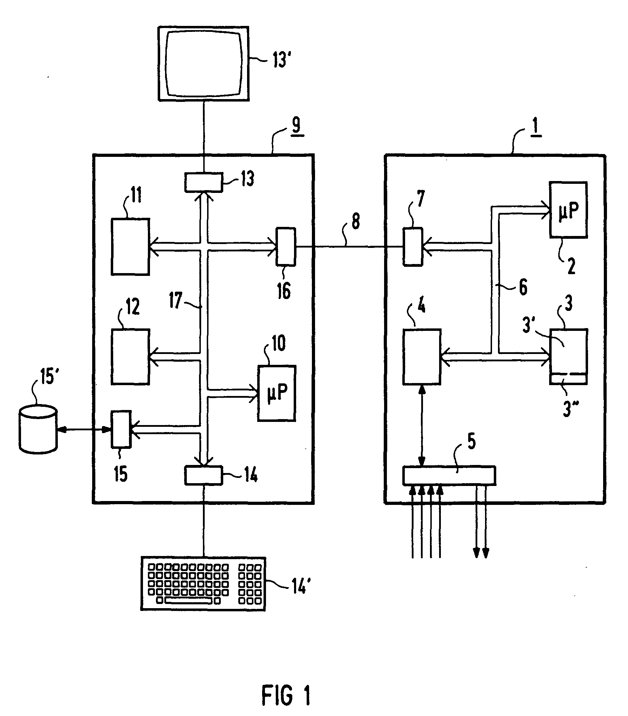

FIG 1 zeigt zunächst eine kompakte speicherprogrammierbare Steuerung 1 als Beispiel eines Rechengeräts. Die kompakte speicherprogrammierbare Steuerung 1 weist einen Mikroprozessor 2 auf, der ein Anwenderprogramm abarbeiten kann, das im Speicherbereich 3' des Remanentspeichers 3 abgespeichert ist. Die Abarbeitung des Anwenderprogramms erfolgt dabei mit Hilfe von Betriebssystemfunktionen, die im Speicherbereich 3" des Remanentspeichers 3 abgespeichert sind.

Bei der Abarbeitung des Anwenderprogramms greift der Prozessor 2 über den Controller 4 auf die Schnittstelle 5 zu und liest von dort Prozeßsignale von einem nicht dargestellten technischen Prozeß bzw. einer nicht dargestellten technischen Anlage ein und gibt Stellbefehle an den technischen Prozeß bzw. die technische Anlage aus.

Der Prozessor 2, der Remanentspeicher 3, der Controller 4 sowie ein nicht dargestellter Schreib-Lese-Speicher sind über den Bus 6 miteinander verbunden. Ebenfalls an den Bus 6 angeschlossen ist die Programmierschnittstelle 7, über die mittels des Verbindungskabels 8 vom Programmiergerät 9 aus der Speicher 3 beschreibbar ist. Das Programmiergerät 9 stellt im vorliegenden Fall also die Programmiereinheit dar. Eine andere mögliche Programmiereinheit wäre beispielsweise ein PC.

Das Programmiergerät 9 weist einen Prozessor 10, ein ROM 11 sowie ein RAM 12 auf. Im ROM 11 ist beispielsweise das Betriebssystem des Programmiergeräts 9 abgespeichert. Ferner weist das Programmiergerät 9 mehrere Schnittstellen 13 bis 16 auf. Es sind dies die Monitorschnittstelle 13, an die der Monitor 13' angeschlossen ist; die Tastaturschnittstelle 14, an welche die Tastatur 14' angeschlossen ist; die Massenspeicherschnittstelle 15, an welche der Massenspeicher 15' (z. B. eine Festplatte) angeschlossen ist; sowie die Programmierschnittstelle 16, welche über das Verbindungskabel 8 an die Programmierschnittstelle 7 der speicherprogrammierbaren Steuerung 1 anschließbar ist. Prozessor 10, ROM 11, RAM 12 sowie die Schnittstellen 13 bis 16 sind über den Bus 17 miteinander verbunden.

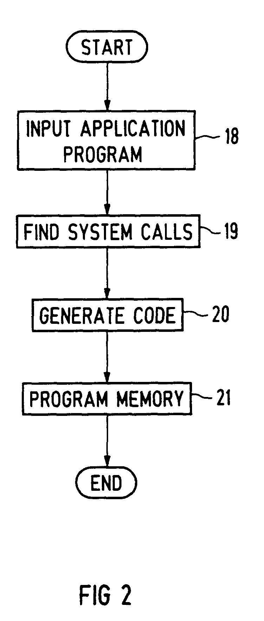

Zur Erstellung eines Programms für den Remanentspeicher 3 der speicherprogrammierbaren Steuerung 1 - vgl. auch FIG 2 - gibt ein Anwender gemäß Schritt 18 über die Tastatur 14' ein Anwenderprogramm in das Programmiergerät 9 ein. Über den Monitor 13' ist der Anwender dabei ständig in der Lage, seine Eingaben zu kontrollieren. Das eingegebene Anwenderprogramm wird im RAM 12 zwischengespeichert.

Wenn die Eingabe des Anwenderprogramms beendet ist, gibt der Anwender ein entsprechendes Kommando über die Tastatur 14' ein. Daraufhin überprüft das Programmiergerät 9 gemäß Schritt 19 für die einzelnen Befehle des Anwenderprogramms, welche Betriebssystemfunktionen der speicherprogrammierbaren Steuerung 1 zur Ausführung des Anwenderprogramms erforderlich sind. Die Überprüfung kann beispielsweise dadurch erfolgen, daß aus dem Massenspeicher 15' eine Tabelle in das RAM 12 geladen wird, in der vermerkt ist, welche möglichen Befehle des Anwenderprogramms welche Betriebssystemfunktionen erfordern. Das Programmiergerät 9 ist daher in der Lage, diejenigen Betriebssystemfunktionen aus der Gesamtheit von Betriebssystemfunktionen der speicherprogrammierbaren Steuerung 1 zu ermitteln, die zur Ausführung des jetzt eingegebenen Anwenderprogramms durch die speicherprogrammierbare Steuerung 1 erforderlich sind.

Nach dem Bestimmen der erforderlichen Betriebssystemfunktionen wird das Anwenderprogramm vom Programmiergerät 9 gemäß Schritt 20 kompiliert und so ein ausführbarer Code für das Anwenderprogramm erzeugt. Dabei werden die zur Ausführung des Anwenderprogramms erforderlichen Betriebssystemfunktionen aus dem Massenspeicher 16' (in dem alle Betriebssystemfunktionen der speicherprogrammierbaren Steueurng 1 abgespeichert sind) abgerufen und in das kompilierte Anwenderprogramm mit eingebunden. Die Betriebssystemfunktionen werden dann zusammen mit dem Anwenderprogramm über die Schnittstellen 16 und 7 sowie das Verbindungskabel 8 gemäß Schritt 21 dem Remanentspeicher 3 eingeprägt.

Im Ergebnis ergibt sich, wie aus FIG 1 ersichtlich ist, daß ein Großteil des Remanentspeichers 3, nämlich der Speicherbereich 3', für das Anwenderprogramm zur Verfügung steht. Dies wäre nicht der Fall, wenn - wie im Stand der Technik - im Remanentspeicher 3 stets alle Betriebssystemfunktionen abgespeichert wären. In diesem Fall würde hierfür ein erheblich größerer Teil des Speichers 3 als der Speicherbereich 3" benötigt.

Alternativ zum Vorhalten aller Betriebssystemfunktionen der speicherprogrammierbaren Steuerung 1 im Massenspeicher 16' ist es selbstverständlich auch möglich, die Betriebssystemfunktionen, z. B. anhand eines in einer Hochsprache geschriebenen Programms, nach Bedarf zu generieren.

Abschließend sei noch erwähnt, daß der Remanentspeicher 3 der speicherprogrammierbaren Steuerung 1 verschieden ausgestaltet sein kann. In Frage kommen beispielsweise ein EEPROM, ein Flash-EPROM oder ein gepuffertes RAM. Entscheidend ist, daß der Speicherinhalt des Speichers 3 nicht bei jedem kurzfristigen Spannungsausfall verlorengeht.

Die vorliegende Erfindung ist selbstverständlich auch nicht auf die Anwendung bei kompakten speicherprogrammierbaren Steuerungen beschränkt. Sie könnte ebenso z. B. bei modularen speicherprogrammierbaren Steuerungen angewendet werden.

## Patentansprüche

1. Programmierverfahren für einen Remanentspeicher (3) einer speicherprogrammierbaren Steuerung (1),
- wobei einer Programmiereinheit (9) von einem Anwender ein von der speicherprogrammierbaren Steuerung (1) auszuführendes Anwenderprogramm vorgegeben wird,
- wobei von der Programmiereinheit (9) anhand des vorgegebenen Anwenderprogramms aus einer Gesamtheit von Betriebssystemfunktionen der speicherprogrammierbaren Steuerung (1) die Betriebssystemfunktionen ermittelt werden, die zur Ausführung des Anwenderprogramms durch die speicherprogrammierbare Steuerung (1) erforderlich sind,
- wobei von der Programmiereinheit (9) ein von der speicherprogrammierbaren Steuerung (1) ausführbarer Code für das Anwenderprogramm und die erforderlichen Betriebssystemfunktionen generiert wird und
- wobei der generierte Code dem Remanentspeicher (3) eingeprägt wird.

2. Speicherprogrammierbare Steuerung (1), mit einem Prozessor (2) und einem Remanentspeicher (3) wobei der Prozessor (2) mit Hilfe von Betriebssystemfunktionen ein Anwenderprogramm ausführen kann, das im Remanentspeicher (3) abgespeichert ist, **dadurch gekennzeichnet**, daß im Remanentspeicher (3) zusätzlich zum Anwenderprogramm nur die zur Ausführung des Anwenderprogramms erforderlichen Betriebssystemfunktionen abgespeichert sind.

3. Programmiereinheit (9) zum Generieren eines Anwenderprogramms für eine speicherprogrammierbare Steuerung (1),
**dadurch gekennzeichnet,**
- daß alle Betriebssystemfunktionen der speicherprogrammierbaren Steuerung (1) in der Programmiereinheit (9) abgespeichert sind bzw. von der Programmiereinheit (9) generierbar sind und
- daß von der Programmiereinheit (9) anhand des Anwenderprogramms aus den Betriebssystemfunktionen der speicherprogrammierbaren Steuerung (1) die Betriebssystemfunktionen ermittelt werden, die zur Ausführung des Anwenderprogramms durch die speicherprogrammierbare Steuerung (1) erforderlich sind.

## Claims

1. Programming method for a remanent memory (3) of a memory-programmable control (1)
- wherein a user enters in a programming unit (9) a user program to be executed by the memory-programmable control (1),
- wherein the operating-system functions that are necessary for the execution of the user program by the memory-programmable control (1) are determined by the programming unit (9) on the basis of the specified user program from a totality of operating-system functions of the memory-programmable control (1),
- wherein a code that can be executed by the memory-programmable control (1) is generated by the programming unit (9) for the user program and the necessary operating-system functions, and
- wherein the generated code is impressed on the remanent memory (3).

2. Memory-programmable control (1), having a processor (2) and a remanent memory (3), wherein the processor (2) can execute a user program that is stored in the remanent memory (3) with the aid of operating-system functions, characterised in that only the operating-system functions necessary for the execution of the user program are stored in the remanent memory (3) in addition to the user program.

3. Programming unit (9) for generating a user program for a memory-programmable control (1),
characterized
- in that all the operating-system functions of the memory-programmable control (1) are stored in the programming unit (9) or can be generated by the programming unit (9), and
- in that the operating system functions that are necessary for the execution of the user program by the memory-programmable control (1) are determined from the operating system functions of the memory-programmable control (1) by the programming unit (9) on the basis of the user program.

## Revendications

1. Procédé de programmation pour une mémoire (3) non volatile d'une commande (1) à mémoire programmable,
- un programme d'application à exécuter par la commande (1) à mémoire programmable étant prescrit à une unité (9) de programmation par un utilisateur,
- les fonctions du système d'exploitation qui sont nécessaires pour l'exécution du programme d'application par la commande (1) à mémoire programmable étant déterminées par l'unité (9) de programmation à l'aide du programme d'application prescrit dans la totalité des fonctions du système d'exploitation de la commande (1) à mémoire programmable,
- un code pour le programme d'application, pouvant être exécuté par la commande (1) à mémoire programmable, et les fonctions du système d'exploitation nécessaires étant générés par l'unité (9) de programmation et
- le code généré étant entré dans la mémoire (3) non volatile.

2. Commande (1) à mémoire programmable, comportant un processeur (2) et une mémoire (3) non volatile, le processeur (2) pouvant exécuter à l'aide de fonctions du système d'exploitation un programme d'application qui est enregistré dans la mémoire (3) non volatile, caractérisée en ce qu'il n'est enregistré dans la mémoire (3) non volatile, en plus du programme d'application, que les fonctions du système d'exploitation nécessaires à l'exécution du programme d'application.

3. Unité (9) de programmation pour générer un programme d'application pour une commande (1) à mémoire programmable, caractérisée en ce que
- toutes les fonctions du système d'exploitation de la commande (1 ) à mémoire programmable sont enregistrées dans l'unité (9) de programmation ou peuvent être générées par l'unité (9) de programmation,
- il est déterminé par l'unité (9) de programmation, à l'aide du programme d'application, parmi les fonctions du système d'exploitation de la commande (1) à mémoire programmable, les fonctions du système d'exploitation qui sont nécessaires pour l'exécution du programme d'application par la commande (1) à mémoire programmable.
